# FASCICULE DE BREVET EUROPEEN

(11) **EP 3 227 472 B1**
(45) Date de publication et mention de la délivrance du brevet: **03.04.2019**
(21) Numéro de dépôt: 15798101.0
(22) Date de dépôt: 20.11.2015
(51) Int. Cl.: C25B 15/00, C25B 1/08, C25B 9/20

(54) **ELECTROLYSEUR DE VAPEUR D'EAU A HAUTE TEMPERATURE.**
HOCHTEMPERATURDAMPFELEKTROLYSEUR
HIGH-TEMPERATURE STEAM ELECTROLYSER

(30) Priorité: 01.12.2014 FR 1461745
(43) Date de publication de la demande: 11.10.2017
(73) Titulaire: COMMISSARIAT À L'ÉNERGIE ATOMIQUE ET AUX ÉNERGIES ALTERNATIVES, 75015 Paris (FR)
(72) Inventeur: CHATROUX, André, F-38210 Tullins (FR); COUTURIER, Karine, F-38360 Sassenage (FR)
(74) Mandataire: Talbot, Alexandre
(86) Numéro de dépôt international: PCT/EP2015/077293
(87) Numéro de publication internationale: WO 2016/087239

(56) Documents cités:
- EP-A1- 2 982 778
- DE-A1-102011 107 383
- DE-C1- 19 540 993
- FR-A1- 3 000 108
- US-A1- 2009 045 049
- US-A1- 2009 224 546

## Description

### Domaine technique

La présente invention a trait à un électrolyseur de vapeur d'eau à haute température. Un tel électrolyseur permet la production de dihydrogène et de dioxygène à partir de vapeur d'eau.

Par « haute température », on entend une température de fonctionnement de l'électrolyseur comprise entre 600°C et 1000°C, préférentiellement entre 650°C et 900°C.

L'électrolyse de l'eau est une réaction électrolytique qui décompose l'eau en dioxygène et dihydrogène gazeux avec l'aide d'un courant électrique selon la réaction :

H₂O→H₂+1/2 O₂

Pour réaliser l'électrolyse de l'eau, il est avantageux de la réaliser à haute température car une partie de l'énergie nécessaire à la réaction peut être apportée par la chaleur qui est moins chère que l'électricité, et l'activation de la réaction est plus efficace à haute température et ne nécessite pas de catalyseur.

### Etat de la technique antérieure

Un électrolyseur de vapeur d'eau à haute température connu de l'état de la technique comporte :
- au moins une cellule électrolytique,
- un circuit d'alimentation configuré pour délivrer un courant à la ou aux cellules électrolytiques, le circuit d'alimentation étant alimenté électriquement par une tension variable.

Une cellule électrolytique comporte successivement une cathode, un électrolyte, et une anode. Dans le cas d'un électrolyseur de vapeur d'eau à haute température, l'électrolyte est de préférence réalisé dans un matériau à base d'un oxyde solide. En effet, pour mettre en oeuvre l'électrolyse à haute température et augmenter les débits de dihydrogène et de dioxygène produits, il est connu d'utiliser un électrolyseur de type SOEC (acronyme anglais pour « *Solid Oxide Electrolyzer Cell*»). Un tel électrolyseur comporte un empilement de motifs élémentaires comprenant chacun une cellule d'électrolyse à oxyde solide positionné entre deux plaques d'interconnexion aussi appelées plaques bipolaires ou interconnecteurs. Une cellule d'électrolyse à oxyde solide comporte trois couches anode/électrolyte/cathode empilées et en contact physique. Les interconnecteurs sont des conducteurs électroniques et sont en contact électrique avec l'anode ou la cathode. Plus précisément, un interconnecteur assure le contact électrique par l'une de ses faces avec la cathode d'une cellule, et par l'autre de ses faces avec l'anode de la cellule adjacente. Les interconnecteurs ont pour fonction d'assurer à la fois le passage du courant électrique et la circulation des gaz au voisinage de chaque cellule (vapeur d'eau injectée, dihydrogène et dioxygène extraits) et de séparer les compartiments anodiques et cathodiques qui sont les compartiments de circulation des gaz du côté respectivement des anodes et des cathodes des cellules. L'ensemble est positionné entre deux plaques d'interconnexion d'extrémité, appelées plaques monopolaires, qui assurent les fonctions de distribution électrique et fluidique de l'électrolyseur. Pour réaliser l'électrolyse de la vapeur d'eau à haute température, on injecte de la vapeur d'eau dans le compartiment cathodique. Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène et des ions oxygène O²⁻. Le dihydrogène est collecté et évacué en sortie de compartiment à vapeur d'eau/hydrogène. Les ions oxygène O²⁻ migrent à travers l'électrolyte et se recombinent en dioxygène à l'interface entre l'électrolyte et l'électrode à oxygène (anode).

La tension variable est classiquement une tension secteur, périodique et alternative de type sinusoïdale. Par « variable », on entend une grandeur, telle que la tension ou le courant, qui varie au cours du temps.

Dans l'état de la technique, le courant délivré par le circuit d'alimentation est un courant unidirectionnel et constant au cours de la durée de fonctionnement de l'électrolyseur. On peut citer les documents de l'état de la technique suivants : US 2014272734, EP 1930974, « Parametric study of an efficient renewable power-to-substitute-natural-gas process including high-temperature steam electrolysis », M. de Saint Jean et al., International Journal of Hydrogen Energy, vol. 39 (30), 2014, p. 17024-17039, « High temperature solid oxide electrolysis cell employing porous structured (La0.75Sr0.25)0.95MnO3 with enhanced oxygen electrode performance », C. Yang et al., International Journal of Hydrogen Energy, vol. 35 (8), 2010, p. 3221-3226, « Development and opération of alternative oxygen electrode materials for hydrogen production by high temperature steam electrolysis », F. Chauveau et al., International Journal of Hydrogen Energy, vol. 36 (3), 2011, p. 7785-7790, « The effect of gas compositions on the performance and durability of solid oxide electrolysis cells », S.-D. Kim et al., International Journal of Hydrogen Energy, vol. 38 (16), 2013, p. 6569-6576, « Durability Testing of a High-Temperature Steam Electrolyzer Stack at 700°C », Q. Fu et al., Fuel Cells, vol. 14(3), 2014, p. 395-402, « Recent Progress in the Development of Solid Oxide Electrolyzers at ECN», J.P. Ouweltjes et al., Proceedings of the WHEC, 2010, Essen, « Nine Thousand Hours of Operation of a Solid Oxide Cell in Steam Electrolysis Mode », J. Schefold et al., J. Electrochem. Soc. , vol. 159(2), 2012, A137-A144, « High Temperature Electrolysis 4 kW Experiment Design, Operation, and Results », J.E. O'Brien et al., INL/EXT-12-27082, Idaho National Laboratory, (2012).

Par « unidirectionnel », on entend un courant qui circule dans le même sens au cours de la durée de fonctionnement de l'électrolyseur, ce qui correspond également à la définition d'un courant dit continu.

Par « constant », on entend un courant dont l'amplitude est constante au cours de la durée de fonctionnement de l'électrolyseur.

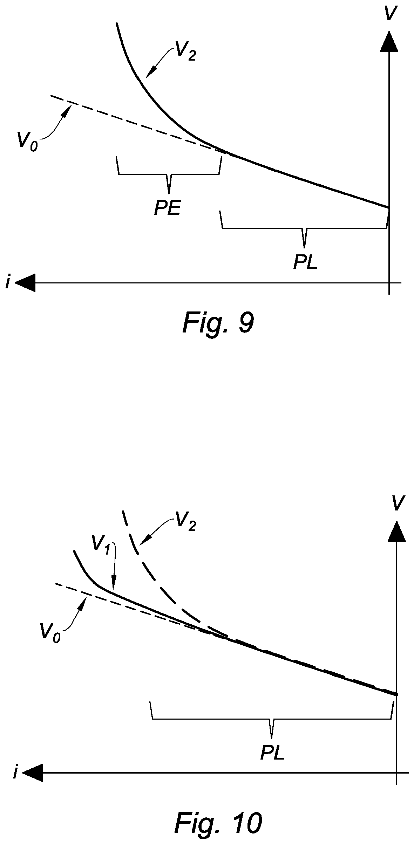

Un électrolyseur de vapeur d'eau à haute température autorise des densités de courant élevées, de l'ordre de 0,5 à 3 A/cm². Lorsque l'on augmente la densité de courant à partir d'un certain seuil, la tension aux bornes de la ou chaque cellule électrolytique (notée V₂ à la figure 9) n'augmente plus de façon linéaire (partie PL à la figure 9, correspondant à une tension linéaire notée V₀) mais de façon exponentielle (partie PE à la figure 9), ce qui conduit à leur dégradation accélérée.

### Exposé de l'invention

La présente invention vise à remédier en tout ou partie aux inconvénients précités, et concerne à cet effet un électrolyseur de vapeur d'eau à haute température, comportant :
- au moins une cellule électrolytique,
- un circuit d'alimentation configuré pour délivrer un courant à la ou aux cellules électrolytiques, le circuit d'alimentation étant alimenté électriquement par une tension variable,
l'électrolyseur étant remarquable en ce qu'il comporte des moyens de modulation configurés pour moduler temporellement la tension variable de sorte que le courant délivré par le circuit d'alimentation est un courant impulsionnel présentant une amplitude variable et une valeur moyenne ajustée selon une consigne.

### Définition

Par « courant impulsionnel », on entend un courant présentant des variations d'amplitude brusques entre deux états au cours de la durée de fonctionnement de l'électrolyseur, la durée des impulsions étant de préférence inférieure à 100 ms.

Ainsi, un tel courant impulsionnel permet d'améliorer la durée de vie de la ou chaque cellule électrolytique car celles-ci ne sont soumises à une densité de courant élevée que durant un laps de temps très court, le laps de temps correspondant à la durée d'une impulsion, typiquement inférieure à 100 ms.

En outre, un tel courant impulsionnel permet d'augmenter la densité de courant crête relativement à l'état de la technique, et ce sans augmenter indûment la chaleur dissipée par effet Joule au sein de l'électrolyseur. Il en résulte une amélioration de l'efficacité de l'électrolyseur qui se traduit une plus grande partie linéaire de l'augmentation de la tension aux bornes de la ou chaque cellule électrolytique en fonction de la densité de courant, comme illustré à la figure 10.

Par ailleurs, la valeur moyenne du courant impulsionnel est ajustée selon une consigne correspondant à un point de fonctionnement de l'électrolyseur.

Dans un mode de réalisation, la tension variable est périodique et alternative, et les moyens de modulation comportent un redresseur placé dans le circuit d'alimentation.

Ainsi, un tel redresseur permet de convertir la tension variable alternative en un courant unidirectionnel, tout ou partie des alternances de la tension variable formant des impulsions du courant impulsionnel. Le courant obtenu à partir du redresseur est unidirectionnel et variable (ou, autrement dit, continu et non constant) si bien qu'il n'est pas filtré, ce qui permet de simplifier l'électronique de l'électrolyseur.

Selon une forme d'exécution, le redresseur est à simple alternance ou à double alternance.

Ainsi, toutes les alternances (de signe positif et négatif) de la tension variable forment des impulsions du courant impulsionnel lorsque le redresseur est à double alternance. Seules les alternances d'un même signe (signe positif ou négatif selon le sens du courant) forment des impulsions du courant impulsionnel lorsque le redresseur est à simple alternance.

Avantageusement, le redresseur est commandé selon la consigne, de préférence par au moins un thyristor.

Ainsi, un tel redresseur commandé permet d'ajuster la valeur moyenne du courant impulsionnel.

Dans un mode de réalisation, le circuit d'alimentation comporte des moyens de commutation, et les moyens de modulation comportent des moyens de commande configurés pour commander les moyens de commutation selon un rapport cyclique déterminé selon la consigne.

Ainsi, de tels moyens de commande permettent à la fois de modifier la fréquence et la valeur moyenne du courant impulsionnel.

Selon une forme d'exécution, les moyens de commande comportent un circuit de régulation du rapport cyclique, ledit circuit de régulation étant de préférence un circuit à modulation de largeur d'impulsion.

Selon l'invention, le courant impulsionnel présente une fréquence comprise entre 1 Hz et 1 kHz.

Ainsi, une telle gamme de fréquence permet de réduire fortement la dégradation de la ou des cellules électrolytiques.

La valeur moyenne du courant impulsionnel en densité surfacique est comprise entre 0,5 et 3 A/cm².

Préférentiellement, le courant impulsionnel est unidirectionnel.

Ainsi, le sens du courant correspond au sens de la réaction électrochimique au sein de l'électrolyseur.

Toutefois, selon une variante d'exécution, le courant impulsionnel est partiellement alternatif afin d'obtenir un mode de fonctionnement de pile à combustible.

Selon un mode de réalisation, l'électrolyseur comporte :
- deux plaques monopolaires, dites externes, reliées au circuit d'alimentation,
- un ensemble de cellules électrolytiques montées en série entre les deux plaques monopolaires externes, chaque cellule électrolytique comportant successivement une cathode, un électrolyte, et une anode,
- une plaque bipolaire disposée entre l'anode et la cathode de chaque couple de cellules électrolytiques adjacentes.

Par « bipolaire », on entend que la plaque présente une première partie jouant le rôle de cathode, et une seconde partie jouant le rôle d'anode.

Ainsi, on obtient un électrolyseur à structure bipolaire qui autorise une densité de courant élevée grâce au montage en série des cellules électrolytiques, la conduction s'effectuant à travers l'épaisseur des cellules électrolytiques.

### Brève description des dessins

D'autres caractéristiques et avantages apparaîtront dans la description qui va suivre de différents modes de réalisation d'un électrolyseur selon l'invention, donnés à titre d'exemples non limitatifs, en référence aux dessins annexés dans lesquels :
- la figure 1 est une vue schématique d'un électrolyseur selon un premier mode de réalisation avec son circuit d'alimentation,
- la figure 2 est un graphique représentant le courant i délivré aux cellules électrolytiques en fonction du temps t selon le mode de réalisation illustré à la figure 1,
- la figure 3 est une vue schématique d'un électrolyseur selon un deuxième mode de réalisation avec son circuit d'alimentation,
- la figure 4 est un graphique représentant le courant i délivré aux cellules électrolytiques en fonction du temps t selon le mode de réalisation illustré à la figure 3,
- les figures 5 et 6 sont des graphiques représentant différentes formes de courant i délivré aux cellules électrolytiques en fonction du temps t, correspondant à différents modes de réalisation,
- la figure 7 est un graphique représentant la tension aux bornes d'une cellule électrolytique au cours du temps t,
- la figure 8 est une vue schématique en coupe d'un électrolyseur selon un mode de réalisation de l'invention,
- la figure 9 est un graphique représentant la tension aux bornes d'une cellule électrolytique en fonction de la densité de courant unidirectionnel,
- la figure 10 est un graphique représentant la tension aux bornes d'une cellule électrolytique en fonction de la densité de courant impulsionnel.

### Exposé détaillé des modes de réalisation

Pour les différents modes de réalisation, les mêmes références seront utilisées pour des éléments identiques ou assurant la même fonction, par souci de simplification de la description. Les caractéristiques techniques décrites ci-après pour différents modes de réalisation sont à considérer isolément ou selon toute combinaison techniquement possible.

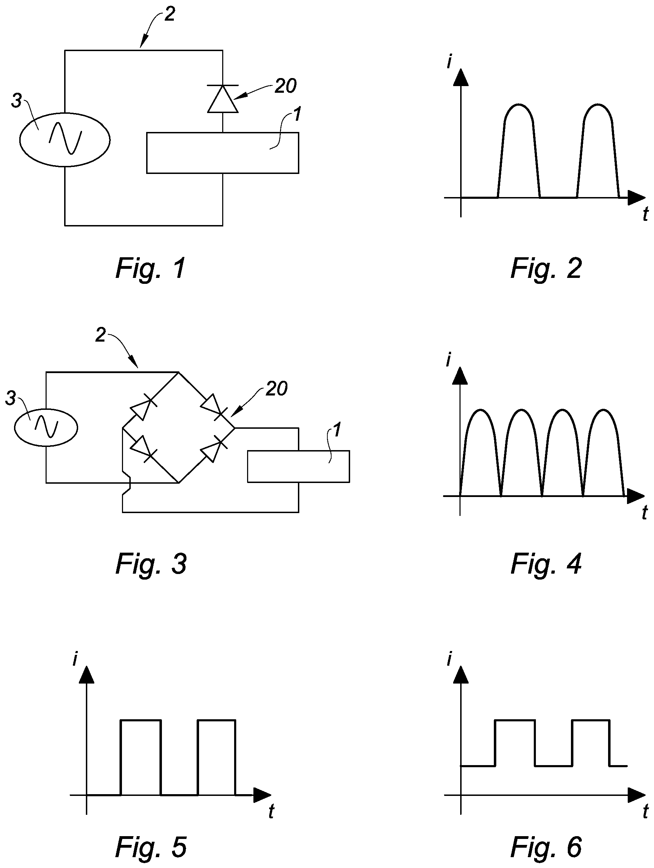

Aux figures 1 à 8 est illustré un électrolyseur 1 de vapeur d'eau à haute température, comportant :
- au moins une cellule électrolytique 4a, 4b,
- un circuit d'alimentation 2 configuré pour délivrer un courant i à la ou aux cellules électrolytiques, le circuit d'alimentation 2 étant alimenté électriquement par une tension variable 3,
- des moyens de modulation configurés pour moduler temporellement la tension variable 3 de sorte que le courant i délivré par le circuit d'alimentation 2 est un courant impulsionnel présentant une amplitude variable et une valeur moyenne ajustée selon une consigne dans lequel le courant impulsionnel présente une fréquence comprise entre 1Hz et 1kHz.

La valeur moyenne du courant impulsionnel en densité surfacique est comprise entre 0,5 et 3 A/cm².

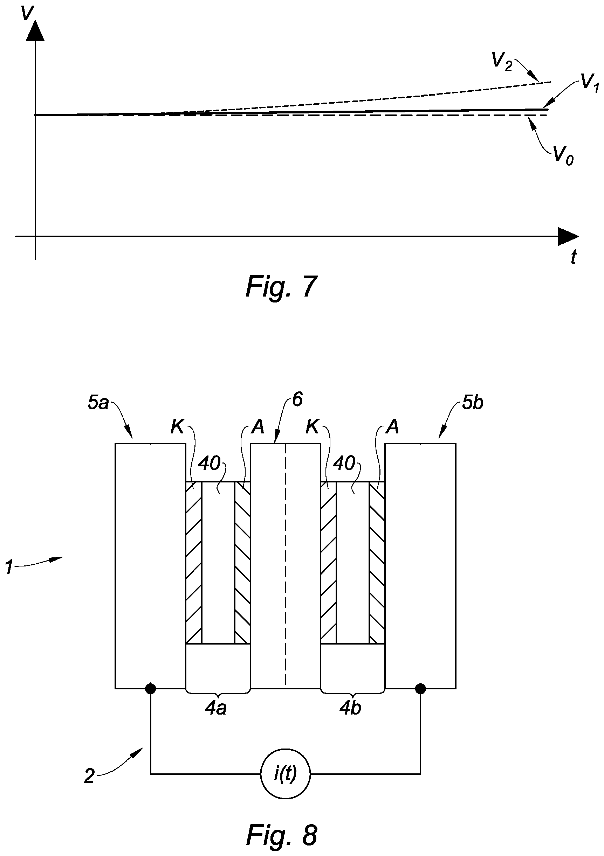

Dans un mode de réalisation illustré à la figure 8, l'électrolyseur 1 comporte :
- deux plaques monopolaires externes 5a, 5b reliées au circuit d'alimentation 2,
- un ensemble de cellules électrolytiques 4a, 4b montées en série entre les deux plaques monopolaires externes 5a, 5b, chaque cellule électrolytique 4a, 4b comportant successivement une cathode K, un électrolyte 40, et une anode A,
- une plaque bipolaire 6 disposée entre l'anode A et la cathode K de chaque couple de cellules électrolytiques 4a, 4b adjacentes.

Par « bipolaire », on entend que la plaque présente une première partie jouant le rôle de cathode, et une seconde partie jouant le rôle d'anode. Les traits pointillés de la figure 8 délimitent la première partie et la seconde partie de la plaque bipolaire 6.

La première partie de la plaque bipolaire 6 jouant le rôle d'anode est en contact avec l'anode A de la cellule électrolytique 4a. La seconde partie de la plaque bipolaire 6 jouant le rôle de cathode est en contact avec la cathode K de la cellule électrolytique 4b, adjacente à la cellule électrolytique 4a.

A chaque cathode K, a lieu la réaction suivante : H₂O + 2e⁻ → H₂ + O²⁻
A chaque anode A, a lieu la réaction suivante : 2O²⁻ → O₂ + 4e⁻
Le courant circulant dans l'électrolyseur 1 est donc composé de différents porteurs de charge :
- des électrons e⁻ dans le circuit d'alimentation 2, dans les plaques monopolaires externes 5a, 5b et dans la plaque bipolaire 6 ;
- des ions O²⁻ dans les électrolytes 40 des cellules électrolytiques 4a, 4b.

L'électrolyte 40 de chaque cellule électrolytique 4a, 4b est avantageusement réalisé dans un matériau à base d'un oxyde solide. Chaque électrolyte 40 est adapté pour conduire les ions O²⁻.

La tension variable 3 est préférentiellement périodique et alternative, encore préférentiellement sinusoïdale, telle que la tension secteur.

Selon un mode de réalisation, les moyens de modulation comportent un redresseur 20 placé dans le circuit d'alimentation 2. Le courant impulsionnel est alors unidirectionnel. Le redresseur 20 est avantageusement commandé selon la consigne, de préférence par au moins un thyristor.

Selon la forme d'exécution illustrée à la figure 1, le redresseur 20 est à simple alternance. Le redresseur 20 comporte une diode placée dans le circuit d'alimentation 2. Le courant i délivré à la ou aux cellules électrolytiques 4a, 4b comporte des impulsions issues des alternances positives de la tension variable 3, comme illustré à la figure 2.

Selon une variante d'exécution illustrée à la figure 3, le redresseur 20 est à double alternance. Le redresseur 20 comporte un pont de diodes (pont de Graetz) placé dans le circuit d'alimentation 2. Le courant i délivré à la ou aux cellules électrolytiques 4a, 4b comporte des impulsions issues des alternances positives et négatives de la tension variable 3, comme illustré à la figure 4.

Dans un mode de réalisation, le circuit d'alimentation 2 comporte des moyens de commutation, et les moyens de modulation comportent des moyens de commande configurés pour commander les moyens de commutation selon un rapport cyclique déterminé selon la consigne. Le courant i délivré à la ou aux cellules électrolytiques 4a, 4b comporte des impulsions pouvant avoir différentes formes et différentes fréquences. A titre d'exemples non limitatifs, une forme carrée avec retour à intensité nulle et une forme carrée avec retour à intensité non nulle sont respectivement illustrées aux figures 5 et 6. Le courant impulsionnel présente une fréquence comprise entre 1 Hz et 1kHz, de préférence comprise entre 10 Hz et 100 Hz.

Selon une forme d'exécution, les moyens de commande comportent un circuit de régulation du rapport cyclique, ledit circuit de régulation étant de préférence un circuit à modulation de largeur d'impulsion.

Comme illustré à la figure 7, la tension V₁ aux bornes de chaque cellule électrolytique 4a, 4b est proche d'une tension V₀ constante, contrairement à une tension V₂ représentative d'un électrolyseur de l'état de la technique.

Comme illustré à la figure 10, la tension V₁ aux bornes de l'électrolyseur alimenté en courant impulsionnel présente une augmentation de tension qui reste linéaire (partie PL correspondant à une tension linéaire notée V₀) jusqu'à une plus forte densité de courant que dans le cas d'un électrolyseur de l'état de la technique (tension V₂).

## Revendications

1. Electrolyseur (1) de vapeur d'eau à haute température, comportant :
- au moins une cellule électrolytique (4a, 4b) comportant un électrolyte (40) réalisé dans un matériau à base d'un oxyde solide,
- un circuit d'alimentation (2) configuré pour délivrer un courant (i) à la ou aux cellules électrolytiques (4a, 4b), le circuit d'alimentation (2) étant alimenté électriquement par une tension variable (3),
l'électrolyseur (1) étant **caractérisé en ce qu'**il comporte des moyens de modulation configurés pour moduler temporellement la tension variable (3) de sorte que le courant (i) délivré par le circuit d'alimentation (2) est un courant impulsionnel présentant une amplitude variable et une valeur moyenne ajustée selon une consigne dans lequel le courant impulsionnel présente une fréquence comprise entre 1 Hz et 1 kHz et la valeur moyenne du courant impulsionnel en densité surfacique est comprise entre 0,5 et 3 A/cm².

2. Electrolyseur (1) selon la revendication 1, **caractérisé en ce que** la tension variable (3) est périodique et alternative, et **en ce que** les moyens de modulation comportent un redresseur (20) placé dans le circuit d'alimentation (2).

3. Electrolyseur (1) selon la revendication 2, **caractérisé en ce que** le redresseur (20) est à simple alternance ou à double alternance.

4. Electrolyseur (1) selon la revendication 2 ou 3, **caractérisé en ce que** le redresseur (20) est commandé selon la consigne, de préférence par au moins un thyristor.

5. Electrolyseur (1) selon la revendication 1, **caractérisé en ce que** le circuit d'alimentation (2) comporte des moyens de commutation, et **en ce que** les moyens de modulation comportent des moyens de commande configurés pour commander les moyens de commutation selon un rapport cyclique déterminé selon la consigne.

6. Electrolyseur (1) selon la revendication 5, **caractérisé en ce que** les moyens de commande comportent un circuit de régulation du rapport cyclique, ledit circuit de régulation étant de préférence un circuit à modulation de largeur d'impulsion.

7. Electrolyseur (1) selon l'une des revendications 1 à 6, **caractérisé en ce que** le courant impulsionnel est unidirectionnel.

8. Electrolyseur (1) selon l'une des revendications 1 à 7, **caractérisé en ce qu'**il comporte :
- deux plaques monopolaires, dites externes (5a, 5b), reliées au circuit d'alimentation (2),
- un ensemble de cellules électrolytiques (4a, 4b) montées en série entre les deux plaques monopolaires externes (5a, 5b), chaque cellule électrolytique (4a, 4b) comportant successivement une cathode (K), un électrolyte (40), et une anode (A),
- une plaque bipolaire (6) disposée entre l'anode (A) et la cathode (K) de chaque couple de cellules électrolytiques (4a, 4b) adjacentes.

## Patentansprüche

1. Hochtemperaturwasserdampf-Elektrolyseur (1), der umfasst:
- mindestens eine Elektrolyse-Zelle (4a, 4b), die ein Elektrolyt (40) enthält, das aus einem Material auf Basis eines festen Oxids hergestellt ist,
- einen Speisestromkreis (2), der dazu ausgeführt ist, einen Strom (i) der oder den Elektrolyse-Zellen (4a, 4b) zuzuführen, wobei der Speisestromkreis (2) durch eine variable Spannung (3) elektrisch gespeist wird,
**dadurch gekennzeichnet,**
**dass** er Modulationsmittel aufweist, die dazu ausgeführt sind, die variable Spannung (3) dergestalt hinsichtlich der Pulsdauer zu modulieren (1), dass der durch den Speisestromkreis (2) abgegebene Strom (i) ein pulsierender Strom ist, der eine variable Amplitude hat sowie einen Mittelwert, der gemäß einem Einstellwert abgerichtet ist, wobei der pulsierende Strom eine Frequenz von 1 Hz bis 1 kHz aufweist und der Mittelwert der Oberflächenstromdichte des pulsierenden Stroms zwischen 0,5 und 3 A/cm² beträgt.

2. Elektrolyseur (1) nach Anspruch 1,
**dadurch gekennzeichnet,**
**dass** die variable Spannung (3) eine periodische Wechselspannung ist und dass die Modulationsmittel einen Gleichrichter (20) umfassen, der in dem Speisestromkreis (2) angeordnet ist.

3. Elektrolyseur (1) nach Anspruch 2,
**dadurch gekennzeichnet,**
**dass** der Gleichrichter (20) ein Einweggleichrichter oder ein Doppelweggleichrichter ist.

4. Elektrolyseur (1) nach Anspruch 2 oder 3,
**dadurch gekennzeichnet,**
**dass** der Gleichrichter (20) gemäß dem Einstellwert gesteuert wird, vorzugsweise durch mindestens einen Thyristor.

5. Elektrolyseur (1) nach Anspruch 1,
**dadurch gekennzeichnet,**
**dass** der Speisestromkreis (2) Umschaltmittel enthält, und dass die Modulationsmittel Steuermittel enthalten, die dazu konfiguriert sind, die Umschaltmittel hinsichtlich eines zyklischen Verhältnisses, das gemäß dem Einstellwert bestimmt ist, zu steuern.

6. Elektrolyseur (1) nach Anspruch 5,
**dadurch gekennzeichnet,**
**dass** die Steuermittel einen Regelkreis für das zyklische Verhältnis enthalten, wobei dieser Regelkreis vorzugsweise ein Pulslängenmodulationskreis ist.

7. Elektrolyseur (1) nach einem der Ansprüche 1 bis 6,
**dadurch gekennzeichnet,**
**dass** der pulsierende Strom einseitig gerichtet ist.

8. Elektrolyseur (1) nach einem der Ansprüche 1 bis 7,
**dadurch gekennzeichnet,**
**dass** er umfasst:
- zwei einpolige Platten, sogenannte äußere Platten (5a, 5b), die mit dem Speisestromkreis (2) verbunden sind,
- eine Gruppe von Elektrolyse-Zellen (4a, 4b), die in Reihe zwischen den beiden äußeren einpoligen Platten (5a, 5b) eingebaut sind, wobei jede Elektrolyse-Zelle (4a, 4b) aufeinander folgend eine Kathode (K), ein Elektrolyt (40) und eine Anode (A) enthält,
- eine zweipolige Platte (6), die zwischen der Anode (A) und der Kathode (K) jedes Paares aneinandergrenzender Elektrolyse-Zellen (4a, 4b) angeordnet ist.

## Claims

1. High-temperature steam electrolyser (1) comprising:
- at least one electrolytic cell (4a, 4b) comprising an electrolyte (40) made from a material based on a solid oxide,
- a power supply circuit (2) configured to deliver a current (i) to the electrolytic cell or cells (4a, 4b), the power supply circuit (2) being electrically supplied by a variable voltage (3),
the electrolyser (1) being **characterized in that** it comprises modulating means configured to temporally modulate the variable voltage (3) so that the current (i) delivered by the power supply circuit (2) is a pulsed current presenting a variable amplitude and a mean value adjusted according to a setpoint in which the pulsed current presents a frequency comprised between 1 Hz and 1 kHz and the mean value of the pulsed current in area density is comprised between 0.5 and 3 A/cm².

2. Electrolyser (1) according to claim 1, **characterised in that** the variable voltage (3) is periodic and alternating, and **in that** the modulating means comprise a rectifier (20) placed in the power supply circuit (2).

3. Electrolyser (1) according to claim 2, **characterised in that** the rectifier (20) is a half-wave or a full-wave rectifier.

4. Electrolyser (1) according to claim 2 or 3, **characterised in that** the rectifier (20) is controlled according to the setpoint, preferably by at least one thyristor.

5. Electrolyser (1) according to claim 1, **characterised in that** the power supply circuit (2) comprises switching means, and **in that** the modulating means comprise control means configured to control the switching means according to a duty cycle determined according to the setpoint.

6. Electrolyser (1) according to claim 5, **characterised in that** the control means comprise a duty cycle regulating circuit, said regulating circuit preferably being a pulse width modulation circuit.

7. Electrolyser (1) according to one of claims 1 to 6, **characterised in that** the pulsed current is unidirectional.

8. Electrolyser (1) according to one of claims 1 to 7, **characterised in that** it comprises:
- two monopolar plates, called external plates (5a, 5b), connected to the power supply circuit (2),
- a set of electrolytic cells (4a, 4b) connected in series between the two external monopolar plates (5a, 5b), each electrolytic cell (4a, 4b) successively comprising a cathode (K), an electrolyte (40), and an anode (A),
- a bipolar plate (6) arranged between the anode (A) and the cathode (K) of each pair of adjacent electrolytic cells (4a, 4b).
